# EUROPEAN PATENT APPLICATION

(11) **EP 3 173 940 A1**
(43) Date of publication of application: **31.05.2017**
(21) Application number: 16197837.4
(22) Date of filing: 08.11.2016
(51) Int. Cl.: G06F 17/27, G06F 17/30, G06Q 10/06

(54) **METHOD AND DEVICE FOR IDENTIFYING INFORMATION AND COMPUTER-READABLE STORAGE MEDIUM**

(30) Priority: 24.11.2015 CN 201510827530
(71) Applicant: Xiaomi Inc., Beijing 100085 (CN)
(72) Inventor: WANG, Pingze, Haidian District, Beijing 100085 (CN); ZHANG, Tao, Haidian District, Beijing 100085 (CN); CHEN, Zhijun, Haidian District, Beijing 100085 (CN)
(74) Representative: Reeve, Nicholas Edward

(57) **Abstract**

A method and device for identifying information and a computer-readable storage medium are provided in the disclosure. The method includes: obtaining at least one clause in target information to be identified, wherein the clause comprises a preset keyword (201); segmenting the clause to obtain one or more words and extracting a specified characteristic set from the one or more words, wherein the specified characteristic set comprises at least one characteristic word (202); identifying a labeling result of the preset keyword in the clause based on the preset keyword, the characteristic word, and a template that is constructed in advance (203). Accuracy of information identification is improved in the disclosure.

## Description

### FIELD

The present disclosure generally relates to a data processing field, and more particularly to a method, device and a computer-readable storage medium for identifying information.

### BACKGROUND

In daily life, a user often receives various messages, such as airtime balance reminder messages, and remaining download allowance notification messages from operators, or other information such as account information messages and credit card payment messages from banks. All of these messages are used to notify the user of some digital information such as an airtime balance, an account balance, and a remaining download allowance and so on, so as to make the user know the information timely.

### SUMMARY OF THE INVENTION

A method and device for constructing a template, a method and device for identifying information, and a computer-readable storage medium are provided in the present disclosure to improve accuracy of information identification.

According to a first aspect of the present disclosure, a method for constructing a template is provided. The method includes: obtaining an original information sample set including at least one piece of original information that belongs to a preset class; in case that the original information includes a preset keyword, labeling the preset keyword based on a preset keyword set to obtain a sample training set; segmenting clauses including the preset keyword in the sample training set to obtain one or more words; extracting a specified characteristic set from the one or more words, wherein the specified characteristic set includes at least one characteristic word; constructing the template based on the preset keyword and the characteristic word in the specified characteristic set; and training the template based on labeling results in the sample training set.

In an example, the processing of extracting a specified characteristic set from the one or more words includes: extracting the specified characteristic set from the one or more words by means of a chi-square test; or extracting the specified characteristic set from the one or more words by means of information gains.

In an example, the processing of constructing the template based on the preset keyword and the characteristic word in the specified characteristic set includes: constructing a Naive Bayes classifier with the characteristic word in the specified characteristic set and the preset keyword, wherein respective characteristic words in the Naive Bayes classifier are independent of each other.

In an example, the processing of training the template based on labeling results in the sample training set includes: for each characteristic word in the Naive Bayes classifier, counting a number of clauses that include the characteristic word and the preset keyword and are a first clause, based on the labeling results in the sample training set; obtaining the trained Naive Bayes classifier based on respective characteristic words, the preset keyword, and the number.

In an example, the processing of labeling the preset keyword based on a preset keyword set to obtain a sample training set includes: in case that the original information includes digital information, labeling the digital information based on the preset keyword set to obtain the sample training set, wherein the preset keyword set includes information indicating attributes of the digital information.

According to a second aspect of the present disclosure, a method for identifying information is provided. The method includes: obtaining at least one clause in target information to be identified, wherein the clause includes a preset keyword; segmenting the clause to obtain one or more words and extracting a specified characteristic set from the one or more words, wherein the specified characteristic set includes at least one characteristic word; identifying a labeling result of the preset keyword in the clause based on the preset keyword, the characteristic word, and a template that is constructed in advance.

In an example, the method further includes: in case that there are a plurality of clauses whose labeling results are a preset labeling result, taking the preset keyword in a clause that has a largest probability of being identified as information of the preset labeling result.

In an example, the processing of extracting a specified characteristic set from the one or more words includes: extracting the specified characteristic set from the one or more words by means of a chi-square test; or extracting the specified characteristic set from the one or more words by means of information gains.

In an example, the preset keyword is digital information, and the labeling result is an attribute of the digital information.

According to a third aspect of the present disclosure, a device for constructing a template is provided. The device includes: a sample obtaining module configured to obtain an original information sample set including at least one piece of original information that belongs to a preset class; a sample processing module configured to, in case that the original information includes a preset keyword, label the preset keyword based on a preset keyword set to obtain a sample training set; a segmentation implementing module configured to segment clauses including the preset keyword in the sample training set to obtain one or more words; a characteristic extracting module configured to extract a specified characteristic set from the one or more words, wherein the specified characteristic set includes at least one characteristic word; a template constructing module configured to construct the template based on the preset keyword and the characteristic word in the specified characteristic set; a template training module configured to train the template based on labeling results in the sample training set.

In an example, the characteristic extracting module is configured to extract the specified characteristic set from the one or more words by means of a chi-square test or information gains.

In an example, the template constructing module is configured to construct a Naive Bayes classifier with the characteristic word in the specified characteristic set and the preset keyword, wherein respective characteristic words in the Naive Bayes classifier are independent of each other.

In an example, the template training module is configured to, for each characteristic word in the Naive Bayes classifier, count a number of clauses that include the characteristic word and the preset keyword and are a first clause, based on the labeling results in the sample training set, and obtain the trained Naive Bayes classifier based on respective characteristic words, the preset keyword, and the number.

In an example, the preset keyword is digital information, and the labeling results are attributes of the digital information.

According to a fourth aspect of the present disclosure, a device for identifying information is provided. The device includes: a clause obtaining module configured to obtain at least one clause in target information to be identified, wherein the clause includes a preset keyword; a word extracting module configured to segment the clause to obtain one or more words and extract a specified characteristic set from the one or more words, wherein the specified characteristic set includes at least one characteristic word; an identification implementing module configured to identify a labeling result of the preset keyword in the clause based on the preset keyword, the characteristic word, and a template that is constructed in advance.

In an example, the identification implementing module is configured to, in case that there are a plurality of clauses whose labeling results are a preset labeling result, take the preset keyword in a clause that has a largest probability of being identified as information of the preset labeling result.

In an example, the word extracting module is configured to extract the specified characteristic set from the one or more words by means of a chi-square test or information gains.

In an example, the preset keyword is digital information, and the labeling result is an attribute of the digital information.

According to a fifth aspect of the present disclosure, a device for constructing a template is provided. The device includes: a processor; a memory for storing instructions executable by the processor; wherein the processor is configured to: obtain an original information sample set including at least one piece of original information that belongs to a preset class; in case that the original information includes a preset keyword, label the preset keyword based on a preset keyword set to obtain a sample training set; segment clauses including the preset keyword in the sample training set to obtain one or more words; extract a specified characteristic set from the one or more words, wherein the specified characteristic set includes at least one characteristic word; construct the template based on the preset keyword and the characteristic word in the specified characteristic set; and train the template based on labeling results in the sample training set.

According to a sixth aspect of the present disclosure, a device for identifying information is provided. The device includes: a processor; a memory for storing instructions executable by the processor; wherein the processor is configured to: obtain at least one clause in target information to be identified, wherein the clause includes a preset keyword; segment the clause to obtain one or more words and extract a specified characteristic set from the one or more words, wherein the specified characteristic set includes at least one characteristic word; identify a labeling result of the preset keyword in the clause based on the preset keyword, the characteristic word, and a template that is constructed in advance.

According to a seventh aspect of the present disclosure, a non-transitory computer-readable storage medium having stored therein instructions that, when executed by a processor, causes the processor to perform a method for identifying information, the method comprising: obtaining at least one clause in target information to be identified, wherein the clause comprises a preset keyword; segmenting the clause to obtain one or more words and extracting a specified characteristic set from the one or more words, wherein the specified characteristic set comprises at least one characteristic word; identifying a labeling result of the preset keyword in the clause based on the preset keyword, the characteristic word, and a template that is constructed in advance.

In technical solutions provided in the present disclosure, the template for identifying is constructed by training the template based on samples including the preset keyword, and the labeling result of the preset keyword in information is identified, so accuracy of information identification is improved.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram showing a method for constructing a template according to an exemplary embodiment.
Fig. 2 is a flow diagram showing another method for constructing a template according to an exemplary embodiment.
Fig. 3 is a diagram showing a system for identifying digital information in a short message by using the methods in the disclosure according to an exemplary embodiment.
Fig. 4 is a flow diagram showing another method for constructing a template according to an exemplary embodiment.
Fig. 5 is a flow diagram showing another method for constructing a template according to an exemplary embodiment.
Fig. 6 is a diagram showing a display mode of a shortcut interface according to an exemplary embodiment.
Fig. 7 is a structure diagram showing a device for constructing a template according to an exemplary embodiment.
Fig. 8 is a structure diagram showing a device for identifying information according to an exemplary embodiment.
Fig. 9 is a block diagram showing a device for identifying information according to an exemplary embodiment.
Fig. 10 is a block diagram showing a device for constructing a template according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

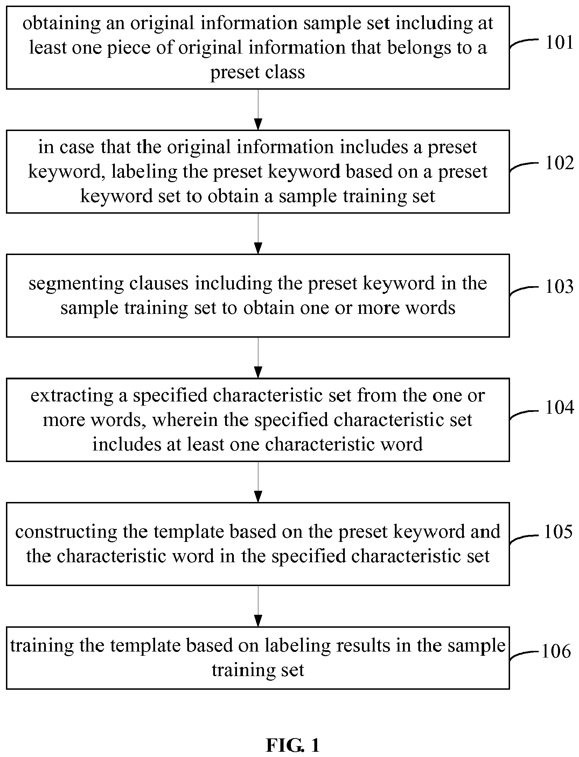

The present disclosure provides a way to identify an information class by using a constructed template. For example, the template may be used to identify a class of digital information in a short message or text message sent by an operator, or may be used to identify other information. Fig. 1 is a flow diagram showing a method for constructing a template according to an exemplary embodiment, wherein the method includes the following steps. Although, short messages will be referred to in the following description, any suitable text or other alphanumeric message encoding may be used.

In step 101, an original information sample set is obtained, wherein the original information sample set includes at least one piece of original information that belongs to a preset class.

For example, in an example of identifying a short message sent by an operator, the original information may be the short message sent by the operator, and may be forwarded to a device for constructing a template by a smart phone when the original information is received by the smart phone. The preset class of the original information may be an information class to be identified by the template to be constructed. For example, if a template for identifying telecom fee information in the short message sent by the operator is to be constructed, the original information sample set may include at least one short message including the telecom fee information, and a telecom fee class is the preset class.

In step 102, in case that the original information includes a preset keyword, the keyword is labeled based on a preset keyword set to obtain a sample training set.

For example, the preset keyword, particularly a class of the preset keyword may be labeled when the class of the original information is identified. For example, when the smart phone receives a short message that "your airtime balance is 12 Yuan" for notifying an airtime balance sent by the operator, the preset keyword is "12" and the labeling of the preset keyword is to label the class of the preset keyword. For example, "12" is the airtime balance rather than an income. After the preset keyword in the original information is labeled in the original information sample set, the original information sample set may be called as the sample training set.

In step 103, clauses including the preset keyword in the sample training set are segmented to obtain one or more words.

For example, the words obtained by the segmentation may also include the preset keyword. In the example of the short message sent by the operator, the words obtained by segmenting the short message for notifying the airtime balance sent by the operator include both the preset keyword "12" and other words such as "your", "airtime" and so on.

In step 104, a specified characteristic set is extracted from the one or more words, wherein the specified characteristic set includes at least one characteristic word.

For example, in the words obtained by the segmentation in step 103, some words such as "ah", "ok" and so on may be useless for identifying the class of the preset keyword and thus may be screened, and remaining words may be used to construct the template. Characteristic words included in the specified characteristic set may be the remaining words.

In step 105, the template is constructed based on the preset keyword and the characteristic word in the specified characteristic set.

The template may be constructed by various approaches. For example, the template may be constructed by using a classifier based on the characteristic word obtained by the above step and the preset keyword.

In step 106, the template is trained based on labeling results in the sample training set.

After being trained, the template may be a template for identifying an information class. For example, when a piece of information or content containing the information is inputted into the template, the template may output the class of the information or obtain probabilities that the information belongs to respective known classes.

In the method for constructing a template in the embodiment, the template for identifying is constructed and trained based on the sample training set including the preset keyword, so that the template may be used to identify the information class, and accuracy of information identification is improved.

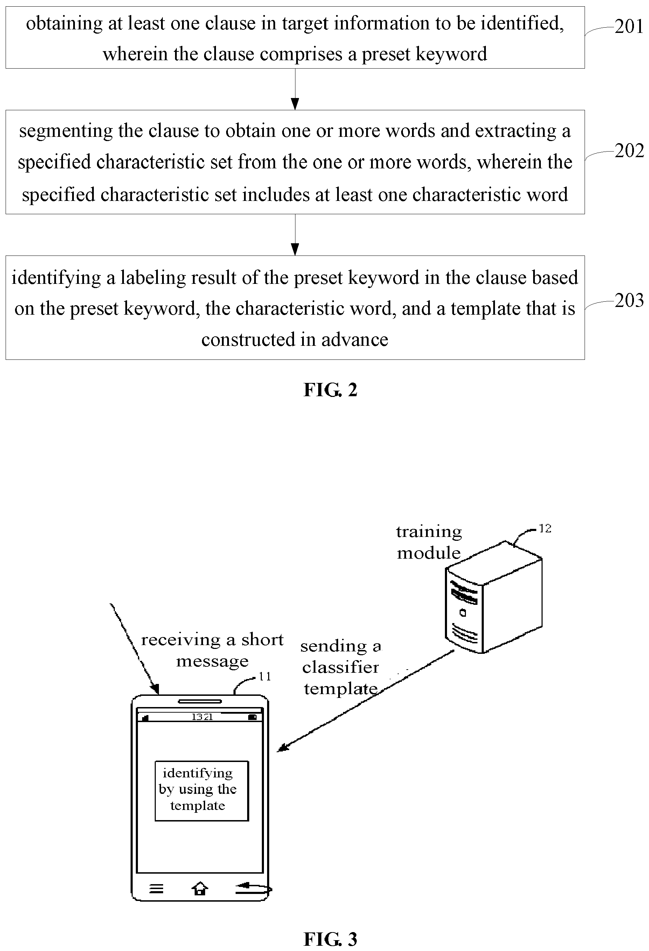

Fig. 2 is a flow diagram showing a method for identifying information according to an exemplary embodiment. The method may be used to identify an information class by using the trained template in fig. 1, and may include the following steps.

In step 201, at least one clause is obtained in target information to be identified, wherein the clause includes a preset keyword.

For example, when the target information is a short message sent by an operator, the at least one clause, for example, a clause that "how do you do" and another clause that "your airtime balance is 12 Yuan", may be obtained in the short message. The at least one clause may include a preset keyword, for example a digit of an airtime balance.

In step 202, the clause is segmented to obtain one or more words and a specified characteristic set is extracted from the one or more words, wherein the specified characteristic set includes at least one characteristic word.

In step 203, a labeling result of the preset keyword in the clause is identified based on the preset keyword, the characteristic word, and a template that is constructed in advance.

For example, the information class may be identified based on the trained template by identifying the labeling result of the preset keyword in the target information. In the example of identifying the short message sent by the operator, it may be identified that the labeling result of the preset keyword is the airtime balance by using the template.

In the method for identifying information in the embodiment, the information class may be identified by using the template that is constructed in advance, so accuracy of information identification may be improved.

Below, an application of the method provided by the disclosure in identifying the short message sent by the operator is described by taking the identification of digital information in the short message as an example. Firstly, several examples of identifying the digital information in short messages are listed.

For example, for a short message that "your airtime balance is less than 10 Yuan", information of "airtime balance - 10 Yuan" may be identified by using the method, i.e. a digital value of a class is identified.

For example, for a short message that "your remaining allowance is 845MB this month", information of "remaining allowance - 845MB" may be identified by using the method.

For example, for a short message that "your grant balance is 344 Yuan, please confirm", information of "grant balance - 344 Yuan" may be identified by using the method.

Short messages received by a user from the operator may include multiple classes of short messages, for example, the short messages mentioned in the above embodiments. Furthermore, a short message may sometimes include multiple classes of digital information. The class of the digital information to be identified by the method may be set in advance, and thus may be called as "preset class".

It is assumed that "airtime balance" is determined as the preset class in the method for identifying information. When the short message received by the user is that "your grant balance is 344 Yuan, please confirm", although the short message also includes a digit of 344, it does not belong to the preset class; so the method may return a result of null, i.e. the digital information of the "airtime balance" class is not found. When it is identified that the digital information "10" in the short message that "your airtime balance is less than 10 Yuan" belongs to the "airtime balance" class, a digit of "10" is returned as a digit to be identified.

Fig. 3 illustrates a system for identifying digital information in a short message by using the method provided in the disclosure. As shown in fig. 3, the system may include a smart terminal 11 and a server 12. The smart terminal 11 may be a smart phone, which is capable of receiving a short message from an operator, of a user. The server 12 may communicate with the smart phone to exchange information therebetween.

In the examples of the disclosure, it is necessary to use the template to identify the digital information. In the examples, the template may be called as a classifier template, which is used to identify the class of the digital information in the short message. The classifier template may be obtained by the server 12 by means of training a template based on collected samples, and may be sent to the smart terminal 11. The smart terminal 11 identifies the digital information in the short message by using the template. In an example of identifying the airtime balance by using the method provided in the disclosure, a process of training the template at the server and a process of identifying the digital information by using the template at the smart phone are described below.

The process of training the template at the server is the following.

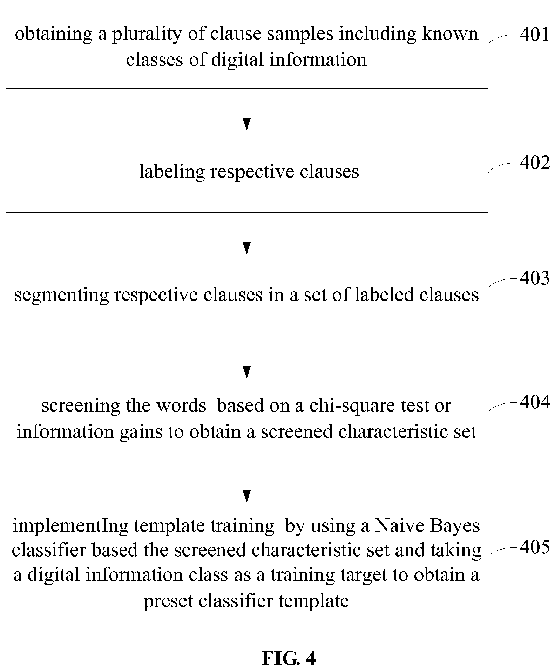

Fig. 4 is a flow diagram showing a process of training a template according to an exemplary embodiment. The server may train the template by using the flow shown in fig. 4 including the following steps, wherein the identification of the airtime balance is taken as an example.

In step 401, a plurality of clause samples including known classes of digital information are obtained.

Samples for training the template may be obtained in this step. For example, the server may collect short messages sent by the operator, wherein the short messages are the original information. The server may collect the short messages sent by the operator by the following way: a plurality of terminals (for example, smart phones) actively forward the short messages sent by the operator to the server upon receiving the short messages; or the server periodically obtains the short messages sent by the operator from the terminals. In the example of identifying the airtime balance, the collected short messages sent by the operator may include at least one short message for notifying the airtime balance.

After a short message is obtained, a clause including an amount of money may be extracted from the short message, wherein the amount of money may be identified by using a regular expression. The regular expression is a logical formula for operating on a character string, i.e. constituting a "rule string" by some specific characters that are defined in advance and any combination of the specific characters and filtering the character string by using the "rule string".

A set of clauses including the amount of money is identified by "T". For example, the set T includes clauses such as "your airtime balance is 64.8 Yuan", "your agreement balance is 924 Yuan", "your grant balance is 344 Yuan" and so on.

In step 402, respective clauses may be labeled.

For example, classes of the digital information in respective clauses may be identified in this step, wherein the digital information such as 64.8, 924 and so on in the clauses may be called as the preset keyword included in the original information. In the example, the classes of the words may be labeled manually; in other application scenarios, the classes of the words may be automatically labeled by the server based on a preset keyword set, wherein the preset keyword set may include preset keywords and class information thereof. For example, the preset keyword set includes information indicating attributes of the digital information, and the digital information in the original information is labeled based on the preset keyword set.

In the example, a name of a class may be customized. For example, there may be three classes in the example: "airtime balance", "other balance", and "non balance". Illustratively, the classes of the digital information in the clauses in step 401 are labeled, for example, labeling 64.8 as "airtime balance", labeling 924 as "other balance", and labeling 344 as "non balance". A set of labeled clauses may be called as T_tag, wherein respective clauses in the set include the digital information, and the classes of the digital information are known.

The labeled original information sample set may be called as the sample training set, in which the preset keyword in the original information is labeled, for example, 64.8 is labeled as "airtime balance".

In step 403, respective clauses in the set of labeled clauses are segmented.

For example, the clauses in the set T-Tag are segmented in this step to obtain one or more words, such as "your", "airtime", "balance", "64.8", "Yuan", "agreement payment", "is" and so on, wherein the preset keyword, for example "64.8" is included in the one or more words. These words obtained by the segmentation may be called as "characteristic words", and a set of characteristic words is identified by W.

In step 404, the words are screened based on a chi-square test or information gains to obtain a screened characteristic set.

For example, in the characteristic words obtained by the segmentation in step 303, some words are useless for class training and thus may be screened, so that the characteristic words may be optimized. The characteristic words may be screened based on the chi-square test or the information gains in this step.

The chi-square test quantizes relevance between characteristics and classes, wherein the stronger the relevance is, the higher a score of a characteristic is, and the higher a probability that the characteristic is preserved is. In the information gains, a measurement of importance is how much information a characteristic carries for a classifier system, wherein the more information the characteristic carries, the more important the characteristic is. Importance degrees of the characteristic words may be quantized based on the chi-square test or the information gains, so the selection is optimized. The optimized characteristic word set is identified by F. For example, some words such as "is", "your" and so on may be screened in the characteristic words in step 403. The step actually is to extract the specified characteristic set from the one or more words obtained by the segmentation, wherein the specified characteristic set includes at least one characteristic word, and the characteristic word is the remaining characteristic word.

In step 405, a template is trained by using a Naive Bayes classifier based the screened characteristic set to obtain a preset classifier template, taking a digital information class as a training target.

For example, taking the class of the amount of money in the clauses as the training target, the set T_tag is trained by using the characteristic word set F that is obtained by the screening in step 404, wherein the template may be trained by using the Naive Bayes classifier. A basic classifying method of the Naive Bayes classifier is the following: on the basis of statistic materials, probabilities of respective classes are calculated based on some characteristics so as to implement classification. In scenarios in which the number of samples is relatively little and the template is trained based on short texts, the Naive Bayes classifier may achieve a better classification effect. In the example, probabilities that the characteristic word belongs to respective classes may be calculated. The template obtained by training is represented by M.

In this step, the template is constructed based on the preset keyword and the specified characteristic set, and is trained based on the labeling results in the sample training set. For example, the labeling results in the sample training set include "labeling 64.8 as an airtime balance"; digits in the samples are labeled by their classes; and the Naive Bayes classifier template may be constructed based on the characteristic words such as "airtime", "balance" and so on extracted from the short messages; respective characteristic words in the Naive Bayes classifier are independent of each other. The template may be trained, and the trained Naive Bayes classifier may obtain the class of some information.

For example, when the template is trained, for each characteristic word in the Naive Bayes classifier, a number of clauses that includes the characteristic word and the preset keyword and are a first clause is counted based on the labeling results in the sample training set. The trained Naive Bayes classifier is obtained based on respective characteristic words, the preset keyword, and the number. The trained Naive Bayes classifier may be used to obtain the probabilities that respective characteristic words belong to respective classes.

In the embodiment, the server may obtain the classifier template by training the clause samples and send the classifier template to the smart phone for identifying the preset target class of digital information in the short messages, so accuracy of digital information identification is improved.

The server sends the template M to the smart phone upon obtaining the template by means of training, so the smart phone may use the template to identify the digital information in the short messages.

The process of identifying the digital information at the smart phone is the following.

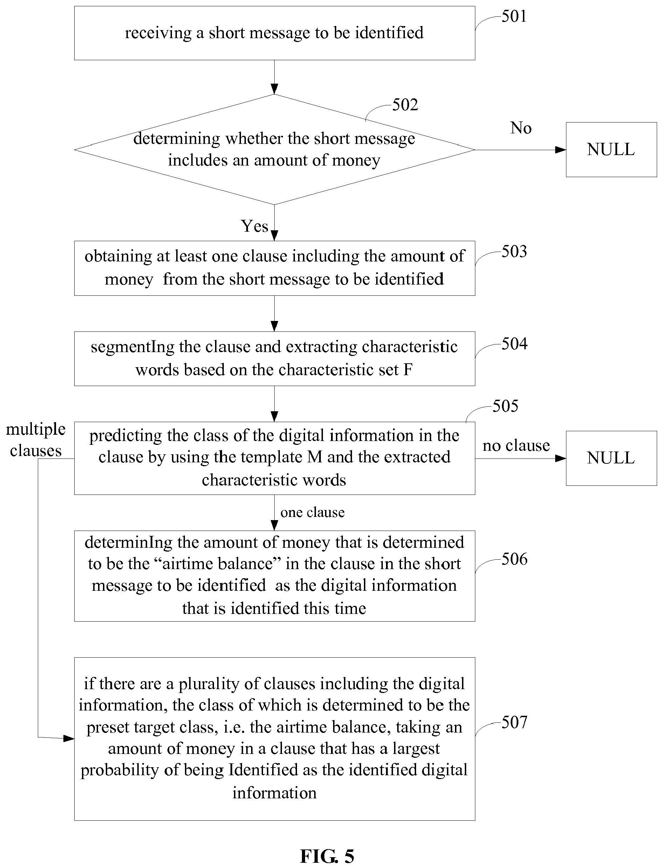

Fig. 5 is a flow diagram showing a method for identifying information according to an exemplary embodiment. The smart phone may identify digital information by using a template according to the flow shown in fig. 5. In the example of identifying the airtime balance, the method includes the following steps.

In step 501, a short message to be identified is received.

For example, in this step, the smart phone may receive a short message from an operator, which is the target information to be identified.

In step 502, it is determined whether the short message to be identified includes an amount of money.

In this step, if the determining result is affirmative, it continues to step 503; or else, it returns NULL.

In step 503, at least one clause including the amount of money is acquired from the short message to be identified.

For example, the short message to be identified may include a plurality of clauses. For example, a short message that "your grant balance is 344 Yuan, please confirm and contact us if you have any question" includes many clauses and a clause including digital information may be selected in this step. In the example, the digital information is the amount of money. For example, "your grant balance is 344 Yuan" is a clause including the digital information, and "please contact us if you have any question" is a clause including no digital information and thus is not selected. The clause includes a preset keyword, for example the digital information of 344.

In step 504, the clause is segmented and characteristic words are extracted based on the characteristic set F.

For example, in this step, words belonging to the characteristic set F obtained in the embodiment in fig. 4 may be extracted from the clause obtained in step 503, based on the characteristic set F; and other words may not be selected.

In step 505, a class of the digital information in the clause is predicted by using the template M and the extracted characteristic words.

In this step, a labeling result of the digit in the short message may be identified based on the trained template, the extracted characteristic words, the preset keyword and so on. That is, the class of the digit is identified. For example, it may be identified whether the digit in the short message is the airtime balance. For any clause, probabilities that the amount of money in the clause belongs to respective classes (i.e. "airtime balance", "other balance", or "non balance") are obtained based on the probabilities that every characteristic word in the clause belongs to respective classes. The class having the largest probability is the class to which the amount of money in the clause belongs.

If there is no clause including an amount of money that is determined to be the "airtime balance" in the short message to be identified, Null is returned as shown in fig. 5. If there is only one clause including an amount of money that is determined to be the "airtime balance" in the short message to be identified, it continues to step 506; if there are a plurality of clauses including an amount of money that is determined to be the "airtime balance", it continues to step 507.

In step 506, the amount of money that is determined to be the "airtime balance" in the clause in the short message to be identified may be determined as the digital information that is identified this time.

In step 507, if there are a plurality of clauses including the digital information, the predicted class of which is the preset target class, i.e. the airtime balance, an amount of money in a clause that has a largest probability of being identified as the airtime balance is taken as the identified digital information.

In this step, there are a plurality of clauses whose labeling results are a preset labeling result, i.e. there are a plurality of clauses including the airtime balance, and the preset keyword in a clause that has a largest probability of being identified is taken as information of the preset labeling result.

In this example, the airtime balance of the user may be automatically identified from the short message received by the user from the operator, and the class of the short message is predicted by using the classifier template, so the accuracy of classification prediction is relatively high.

Furthermore, it should be appreciated that the server may periodically update the template. For example, the server may periodically collect some new short message samples, and obtain new clause samples from the new short message samples, wherein the new clause samples include known classes of digital information. The server may re-trains the template based on the new clause samples and send the updated classifier template to the smart phone after the new classifier template is obtained, so that the smart phone may identify the digital information based on the new template.

In the examples in the present disclosure, after the digital information in the short messages is identified, there may be a plurality of applications capable of implementing some application operations and processing based on the result of identifying so as to facilitate people's life. For example, when the value of the identified digital information is less than or equal to a numerical threshold, a reminder may be provided to the user based on the digital information. The reminder may be used to remind the user of prepaid recharge when the airtime balance is too low, or to remind the user of allowance recharge when the remaining allowance is too little.

Below, two examples of digital information reminder, for example, an airtime balance reminder, are provided.

In an example, it is assumed that an airtime balance threshold is 15 Yuan. When it is determined that the airtime balance of a user is 10 Yuan, which is less than the threshold, by the above method for identifying information, a shortcut interface for adjusting digital information may be provided in a short message, so that the user may adjust the digital information via the shortcut interface. Here, the processing of adjusting the digital information may be prepaid recharge for increasing the airtime balance by the user, and the user may enter an interface for prepaid recharge via the shortcut interface.

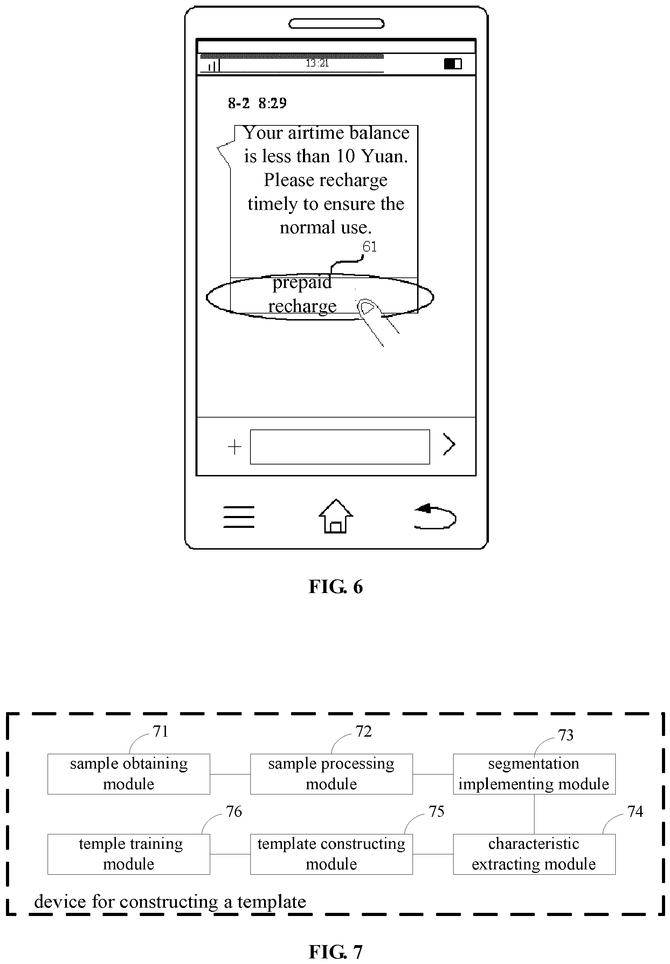

Fig. 6 illustrates a display mode of the shortcut interface. As shown in fig. 6, the smart phone receives a short message from an operator, and identifies that the short message includes an airtime balance of 10 Yuan, which is less than the predetermined threshold of 15 Yuan, by the method for identifying information in the disclosure. A shortcut interface 61 may be displayed at the bottom of the short message, wherein the shortcut interface 61 may be named as "prepaid recharge". Of course, the shortcut interface 61 may also be named as another name, for example "quick recharge", "recharge immediately" or the like.

The user may click the shortcut interface 61 to enter the interface for prepaid recharge, for example, entering a recharge website for prepaid recharge. This display mode of the short interface allows the user to jump to the interface for prepaid recharge by directly clicking the shortcut interface in the short message upon seeing the short message, so the efficiency of recharge operations is greatly improved as compared with a traditional mode in which it is necessary for the user to exit from the short message, search for and then enter the interface for prepaid recharge.

In another example, when it is identified that the airtime balance of the user is 10 Yuan, which is less than the predetermined threshold, the smart phone may also query for an updated value of the digital information from a terminal sending the short message to be identified. For example, after China Mobile sends an airtime balance reminder short message to the user, the user uses the smart phone all the time, so the user has less and less airtime balance. In this example, the smart phone may actively query for variances of the airtime balance, for example, querying for the airtime balance once every day. The querying may be set as backstage querying which is not perceptible to the user.

When it is determined that the digital information is less than or equal to a threshold warning value based on the updated value that is queried, for example, the airtime balance of the user is 2 Yuan and the smart phone will be shut down soon, the smart phone may display a digital information warning notification, for example pop up a warning notification, to remind the user to recharge timely. This example is provided in consideration that some user will forget to recharge after receiving the airtime balance reminder short message, leading to the smart phone shutting down, which will affect usage of the smart phone by the user. By this solution, the smart phone may monitor the variances of the airtime balance at backstage and notify the user of recharging timely by displaying the threshold warning value, so the shutting down of the smart phone may be avoided.

Fig. 7 is a structure diagram showing a device for constructing a template according to an exemplary embodiment. The device may be used to implement the methods for constructing a template in the present disclosure, and may be applicable to for example, a server. As shown in fig. 7, the device may include a sample obtaining module 71, a sample processing module 72, a segmentation implementing module 73, a characteristic extracting module 74, a template constructing module 75, and a temple training module 76.

The sample obtaining module 71 is configured to obtain an original information sample set including at least one piece of original information that belongs to a preset class.

The sample processing module 72 is configured to, in case that the original information includes a preset keyword, label the preset keyword based on a preset keyword set to obtain a sample training set.

The segmentation implementing module 73 is configured to segment clauses including the preset keyword in the sample training set to obtain one or more words.

The characteristic extracting module 74 is configured to extract a specified characteristic set from the one or more words, wherein the specified characteristic set includes at least one characteristic word.

The template constructing module 75 is configured to construct the template based on the preset keyword and the characteristic word in the specified characteristic set.

The template training module 76 is configured to train the template based on labeling results in the sample training set.

Furthermore, the characteristic extracting module 74 is configured to extract the specified characteristic set from the one or more words by means of a chi-square test or information gains.

Furthermore, the template constructing module 75 is configured to construct a Naive Bayes classifier with the characteristic word in the specified characteristic set and the preset keyword, wherein respective characteristic words in the Naive Bayes classifier are independent of each other.

Furthermore, the template training module 76 is configured to, for each characteristic word in the Naive Bayes classifier, count a number of clauses that include the characteristic word and the preset keyword and are a first clause, based on the labeling results in the sample training set, and obtain the trained Naive Bayes classifier based on respective characteristic words, the preset keyword, and the number.

Furthermore, the preset keyword is digital information, and the labeling results are attributes of the digital information.

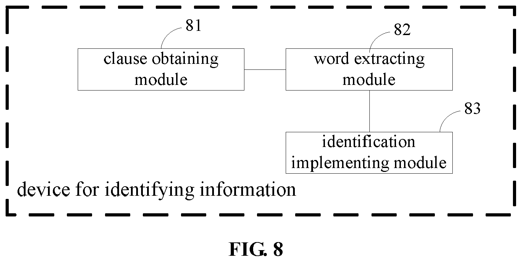

Fig. 8 is a structure diagram showing a device for identifying information according to an exemplary embodiment. The device may be used to implement the method for identifying information in the present disclosure, and may be applicable to for example, a smart terminal. As shown in fig. 8, the device may include a clause obtaining module 81, a word extracting module 82, and an identification implementing module 83.

The clause obtaining module 81 is configured to obtain at least one clause in target information to be identified, wherein the clause includes a preset keyword.

The word extracting module 82 is configured to segment the clause to obtain one or more words and extract a specified characteristic set from the one or more words, wherein the specified characteristic set includes at least one characteristic word.

The identification implementing module 83 is configured to identify a labeling result of the preset keyword in the clause based on the preset keyword, the characteristic word, and a template that is constructed in advance.

Furthermore, the identification implementing module 83 is configured to, in case that there are a plurality of clauses whose labeling results are a preset labeling result, take the preset keyword in a clause that has a largest probability of being identified as information of the preset labeling result.

Furthermore, the word extracting module 82 is configured to extract the specified characteristic set from the one or more words by means of a chi-square test or information gains.

Furthermore, the preset keyword is digital information, and the labeling result is an attribute of the digital information.

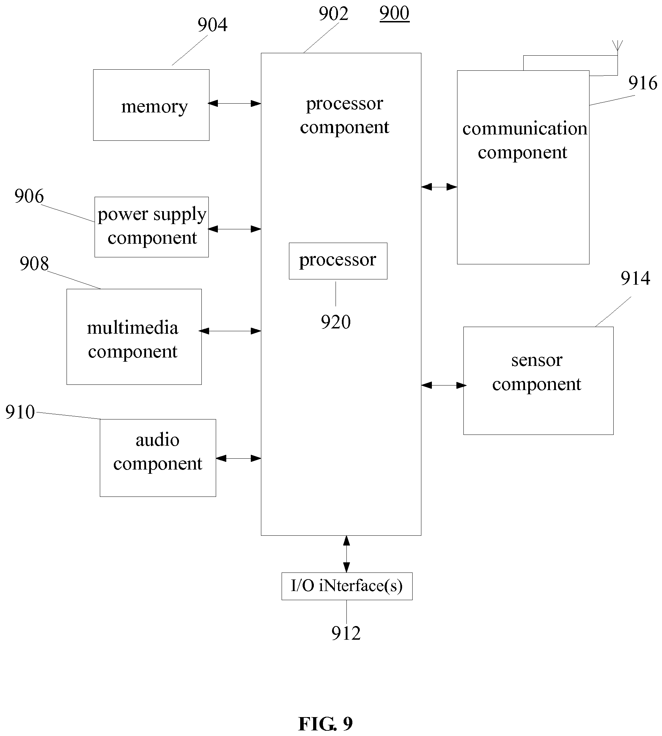

Fig. 9 is a block diagram of an apparatus 900 for identifying information according to an exemplary embodiment. For example, the apparatus 900 may be a mobile phone, a computer, a digital broadcast terminal, a messaging device, a gaming console, a tablet, a medical device, exercise equipment, a personal digital assistant, and the like.

Referring to Fig. 9, the apparatus 900 may include one or more of the following components: a processor component 902, a memory 904, a power supply component 906, a multimedia component 908, an audio component 910, an input/output (I/O) interface 912, a sensor component 914, and a communication component 916.

The processor component 902 typically controls overall operations of the apparatus 900, such as the operations associated with display, telephone calls, data communications, camera operations, and recording operations. The processor component 902 may include one or more processors 920 to execute instructions to implement the methods for identifying informaiton in the present disclosure. Moreover, the processor component 902 may include one or more modules which facilitate the interaction between the processor component 902 and other components. For example, the processor component 902 may include a multimedia module to facilitate the interaction between the multimedia component 908 and the processor component 902.

The memory 904 is configured to store various types of data to support the operations of the apparatus 900. Examples of such data include instructions for any applications or methods operated on the apparatus 900, contact data, phonebook data, messages, pictures, videos, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 906 supplies power to various components of the apparatus 900. The power supply component 906 may include a power management system, one or more power supplies, and any other components associated with the generation, management, and distribution of power for the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive multimedia data from external while the apparatus 900 is in an operation mode, such as a photographing mode or a video mode. Each of the front camera and the rear camera may be a fixed optical lens system or have optical focusing and zooming capability.

The audio component 910 is configured to output and/or input audio signals. For example, the audio component 910 includes a microphone ("MIC") configured to receive audio signals from external when the apparatus 900 is in an operation mode, such as a call mode, a recording mode, and a voice recognition mode. The received audio signals may be further stored in the memory 904 or transmitted via the communication component 916. In some embodiments, the audio component 910 further includes a speaker to output audio signals.

The I/O interface 912 provides an interface between the processor component 902 and peripheral interface modules, the peripheral interface modules being, for example, a keyboard, a click wheel, buttons, and the like. The buttons may include, but are not limited to, a home button, a volume button, a starting button, and a locking button.

The sensor component 914 includes one or more sensors to provide status assessments of various aspects of the apparatus 900. For instance, the sensor component 914 may detect an open/closed status of the apparatus 900, relative positioning of components (e.g., the display and the keypad of the apparatus 900), a change in position of the apparatus 900 or a component of the apparatus 900, a presence or absence of user contact with the apparatus 900, an orientation or an acceleration/deceleration of the apparatus 900, and a change in temperature of the apparatus 900. The sensor component 914 may include a proximity sensor configured to detect the presence of a nearby object without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the apparatus 900 and other devices. The apparatus 900 may access a wireless network based on a communication standard, such as WiFi, 2G, or 3G, or a combination thereof. In an exemplary embodiment, the communication component 916 receives a broadcast signal or broadcast associated information from an external broadcast management system via a broadcast channel. In an exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as a memory including instructions, executable by the processor in the apparatus, for performing the above-described methods. For example, the non-transitory computer-readable storage medium may be a ROM, a RAM, a CD-ROM, a magnetic tape, a floppy disc, an optical data storage device, and the so on.

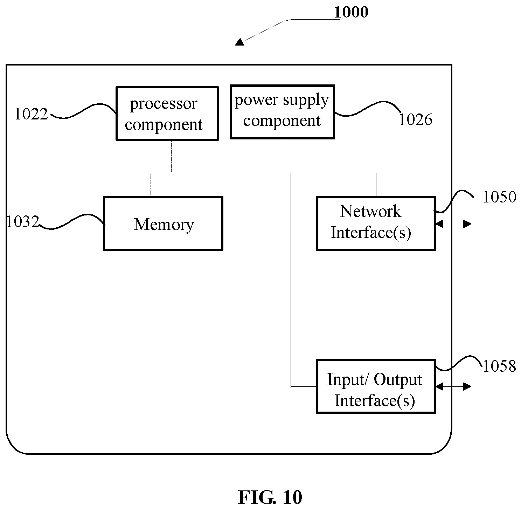

Fig. 10 is a block diagram showing a device 1000 for constructing a template according to an exemplary embodiment. For example, the device 1000 may be a server. As shown in fig. 10, the device 1000 includes a processor component 1022, which includes one or more processors, and memory resources represented by a memory 1032 for storing instructions, for example, application programs, executable by the processor component 1022. The application programs stored in the memory 1032 may include one or more modules, each of which may include a set of instructions. Further, the processor component 1022 may be configured to execute the instructions to implement the methods for constructing a template in the present disclosure.

The device 1000 may also include a power supply component 1026 configured to implement power management on the device 1000, a wired or wireless network interface 1050 configured to connect the device 1000 to a network, and an input/output interface 1058. The device 1000 may operate based on an operating system such as Windows Server^{™}, Mac OS X^{™}, Unix^{™}, Linux^{™}, FreeBSD^{™}, or the like stored in the memory 1032.

Other embodiments of the disclosure will be apparent to those skilled in the art from consideration of the specification and practice of the invention disclosed here. This application is intended to cover any variations, uses, or adaptations of the disclosure following the general principles thereof and including such departures from the present disclosure as come within known or customary practice in the art. The specification and embodiments are merely considered to be exemplary and the substantive scope of the disclosure is limited only by the appended claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for identifying information, **characterized in** comprising:
obtaining at least one clause in target information to be identified, wherein the clause comprises a preset keyword (201);
segmenting the clause to obtain one or more words and extracting a specified characteristic set from the one or more words, wherein the specified characteristic set comprises at least one characteristic word (202);
identifying a labeling result of the preset keyword in the clause based on the preset keyword, the characteristic word, and a template that is constructed in advance (203).

2. The method of claim 1, further comprising:
in case that there are a plurality of clauses whose labeling results are a preset labeling result, taking the preset keyword in a clause that has a largest probability of being identified as information of the preset labeling result (507).

3. The method of claim 1 or 2, wherein the processing of extracting a specified characteristic set from the one or more words comprises:
extracting the specified characteristic set from the one or more words by means of a chi-square test; or
extracting the specified characteristic set from the one or more words by means of information gains.

4. The method of any preceding claim, wherein the preset keyword is digital information, and the labeling result is an attribute of the digital information.

5. A device for identifying information, **characterized in** comprising:
a clause obtaining module (81) configured to obtain at least one clause in target information to be identified, wherein the clause comprises a preset keyword;
a word extracting module (82) configured to segment the clause to obtain one or more words and extract a specified characteristic set from the one or more words, wherein the specified characteristic set comprises at least one characteristic word;
an identification implementing module (83) configured to identify a labeling result of the preset keyword in the clause based on the preset keyword, the characteristic word, and a template that is constructed in advance.

6. The device of claim 5, wherein the identification implementing module (83) is configured to, in case that there are a plurality of clauses whose labeling results are a preset labeling result, take the preset keyword in a clause that has a largest probability of being identified as information of the preset labeling result.

7. The device of claim 5 or 6, wherein the word extracting module (82) is configured to extract the specified characteristic set from the one or more words by means of a chi-square test or information gains.

8. The device of claim 5, 6 or 7, wherein the preset keyword is digital information and the labeling results are attributes of the digital information.

9. A device for identifying information, **characterized in** comprising:
a processor (902);
a memory (904) for storing instructions executable by the processor;
wherein the processor (902) is configured to:
obtain at least one clause in target information to be identified, wherein the clause comprises a preset keyword;
segment the clause to obtain one or more words and extract a specified characteristic set from the one or more words, wherein the specified characteristic set comprises at least one characteristic word;
identify a labeling result of the preset keyword in the clause based on the preset keyword, the characteristic word, and a template that is constructed in advance.

10. The device of claim 9, wherein the processor is further configured to, in case that there are a plurality of clauses whose labeling results are a preset labeling result, take the preset keyword in a clause that has a largest probability of being identified as information of the preset labeling result.

11. The device of claim 9, wherein the processor is further configured to extract the specified characteristic set from the one or more words by means of a chi-square test or information gains.

12. The device of claim 9, wherein the preset keyword is digital information and the labeling results are attributes of the digital information.

13. A computer program including instructions for executing the steps of a method for identifying information according to any one of claims 1 to 4 when said program is executed by a computer.

14. A recording medium readable by a computer and having recorded thereon a computer program including instructions for executing the steps of a method for identifying information according to any one of claims 1 to 4.
